# EUROPEAN PATENT SPECIFICATION

(11) **EP 2 421 419 B1**
(45) Date of publication and mention of the grant of the patent: **02.09.2015**
(21) Application number: 10715242.3
(22) Date of filing: 23.04.2010
(51) Int. Cl.: A47J 41/00

(54) **DOUBLE WALLED CONTAINER AND METHOD OF MANUFACTURE**
DOPPELWANDIGER BEHÄLTER UND HERSTELLUNGSVERFAHREN
RECIPIENT A DOUBLE PAROI ET SON PROCEDE DE FABRICATION

(30) Priority: 23.04.2009 EP 09158663
(43) Date of publication of application: 29.02.2012
(73) Proprietor: Crown Packaging Technology, Inc., Alsip, IL 60803-2599 (US)
(72) Inventor: DUNWOODY, Paul, Robert, Wantage Oxfordshire OX12 9EU (GB); CLAYDON, Paul, Charles, Wantage Oxfordshire OX12 9YA (GB)
(74) Representative: Lind, Robert
(86) International application number: PCT/EP2010/055481
(87) International publication number: WO 2010/122161

(56) References cited:
- EP-A1- 0 499 766
- EP-A1- 0 755 877
- DE-C- 622 089
- US-A- 5 108 768

## Description

### Technical Field

The present invention generally relates to beverage containers and more particularly to double wall beverage containers, which provide some insulation to the contents of the container. Many of such containers of beverage are refrigerated prior to use, but when stored out of a refrigerator or held in a user's hand the contents of the container warms up. However, a double walled container, defining an insulating air gap between the two walls helps to mitigate this warming effect somewhat.

### Background Art

US 2008169297 A (COORS BREWING COMPANY) 17/07/2008 describes a double walled container and associated method of manufacture. However the containers described in this document have several disadvantages.

The top of the outer shell or container fits the outside diameter of the sidewall of the inner container, such that the two are held together either by a slight interference or "press" fit. For an interference fit, the inner container must be pushed with significant force into the outer container, and a ventilation hole is required in the outer container to allow trapped air to escape. Such a ventilation hole may subsequently need to be repaired with a patch.

Alternatively, an adhesive process is described to couple the inner and outer containers together. However, application of an adhesive material may be an expensive, messy and time-consuming process.

Also, the top of the metal (steel or aluminium) outer container, as described in US 2008169297, has a cut-edge, which may be dangerously exposed if the container is damaged and/or dented.

EP-A-0 755 877 discloses a double walled container having all the features in the preamble of claim 1. Here the inwardly formed curl contacts the inner container at the top edge of said container.

### Disclosure of Invention

Accordingly, the present invention provides a double walled container as claimed in claim 1 and a method of manufacturing the double walled container as claimed in claim 6.

Thus, in the double walled container according to the invention the outer container is secured to the inner container at a portion, whose diameter is less that the diameter of the sidewall of the inner container. Preferably, the outer container is initially larger than the inner container, which may be easily slid therein. Thereafter (once the containers are nested together), a portion of the outer container is formed inwardly so that its diameter is smaller than the associated sidewall of the inner container. In this way, the containers may be secured together without the difficulty of an interference or "press" fit.

An inward curl may be provided around the cut edge or rim of the outer container. This provides cut-edge protection should the double walled container be damaged during handling.

Preferably, the inner container is a conventional beverage container, which is manufactured, filled and sealed using conventional tooling and according to conventional processes. This is particularly advantageous where investment in new tooling and equipment is costly. The manufacture of the outer container and the process of fixing the outer container to the inner container also makes use of conventional techniques and tooling where possible. Thus, the outer container may be applied to a conventional filled and sealed beverage can as the final stage of production, prior to secondary packaging. This has the benefit of minimising damage to the outer container, such as might occur during handling in the conventional filling and sealing process.

Reduction of the susceptibility of the sidewall of the outer container to damage is particularly important in the double walled container according to the invention, because there is no structural support from the product pressure, as in conventional beverage cans. Using an increased wall thickness (compared to that of a conventional beverage can) to enhance the structural rigidity of the outer container is an option, but this increases the cost. It will be apparent to the person skilled in the art that conventional beading may be provided on the sidewall of the outer container to increase structural rigidity. Dimples, which provide support of the sidewall of the outer container by contact with the sidewall of the inner container are also possible, but such contact provides a conduction path for heat from the surroundings outside the double walled container to the product held inside the inner container.

The inventors also considered the addition of pressure in the gap between the inner and outer container walls, to enhance the support provided for the outer container. However, this has to be carefully balanced because if the pressure is excessive, opening the double walled can would result in ejection of the product from the inner container, unless the inner container were beaded too to mitigate this affect.

Finally, the inventors have investigated the addition of thermal insulation in the gap between the walls of the inner and outer containers both to enhance the thermal insulation of the double walled container and to provide increased support for the wall of the outer container. However, this increases the complexity of the double walled container assembly and thereby also the cost.

Preferably, the diameter of the outer container is sized to allow the inner container to easily slide centrally inside it prior to inward forming of a portion of the outer container. Alternatively, both the inner and outer containers may have substantially the same dimensions and be produced using the same manufacturing processes. Thereafter, the majority of the sidewall of the outer container may be expanded outwardly to provide the desired gap between the inner and outer container walls. Such manufacturing steps permit both inner and outer containers to be initially formed with similar, standard diameters to avoid major changes to conventional manufacturing equipment.

The inner and outer containers may be made from any metal, although either aluminium or steel in any combination is preferred. Although the use of adhesives is undesirable, the metal used in the manufacture of the inner and outer containers may be coated with organic materials or polymers. As a further step in the manufacturing process, these coatings may be fused or adhered together after inward forming of a portion of the outer container to provide a seal, thus preventing ingress and/or egress of fluids if the containers are placed in iced water to chill, for example. Alternatively a sealant may be applied to the inside of the outer container rim or the adjacent region of the inner container prior to inward forming of the outer container rim.

### Brief Description of Figures in the Drawings

The invention will now be described, by way of example only, by reference to the accompanying drawings, in which:
Figures 1 to 6 illustrate a manufacturing progression for the manufacture of a double-walled beverage can formed using an outer can body having an original diameter larger than that of the inner can.
Figure 1 is a sectional view of a straight-walled outer can body, with a detailed view (Fig. 1A) of the encircled region shown therein.
Figure 2 is a sectional view of an inwardly necked outer can body, with a detailed view (Fig. 2A) of the encircled region shown therein.
Figure 3 is a sectional view of an inwardly necked and curled outer can body, with a detailed view (Fig. 3A) of the encircled region shown therein.
Figure 4 is a sectional view of the outer can body of figure 3 having an expanded rim, with a detailed view (Fig. 4A) of the encircled region shown therein.
Figure 5 is a sectional view of an assembly comprising a filled and closed inner can body inserted into the outer can body of figure 4, with a detailed view (Fig. 5A) of the encircled region shown therein.
Figure 6 is a sectional view of the assembly of figure 5 after the rim of the outer can body has been reduced in diameter to less than the diameter of the inner can body, with a detailed view (Fig. 6A) of the encircled region shown therein.

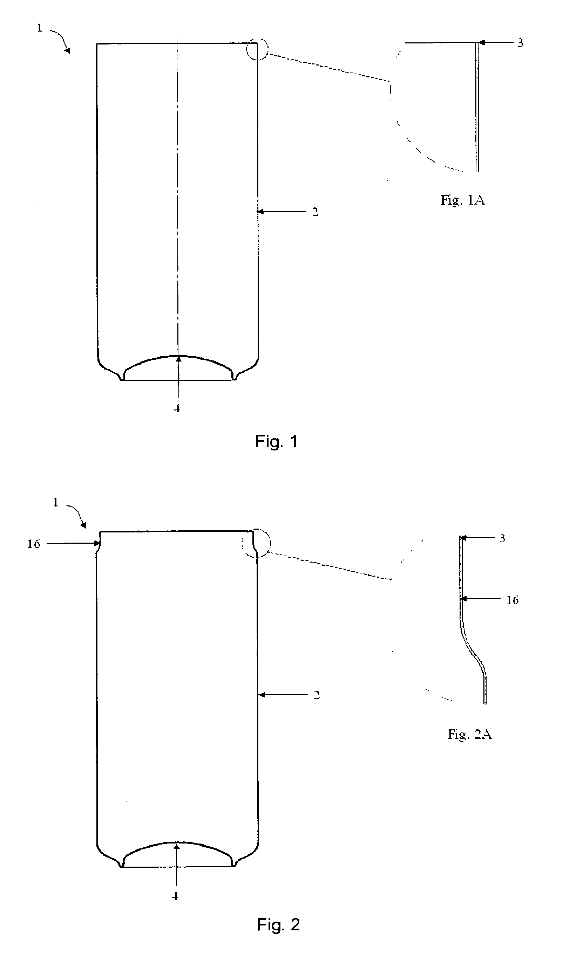

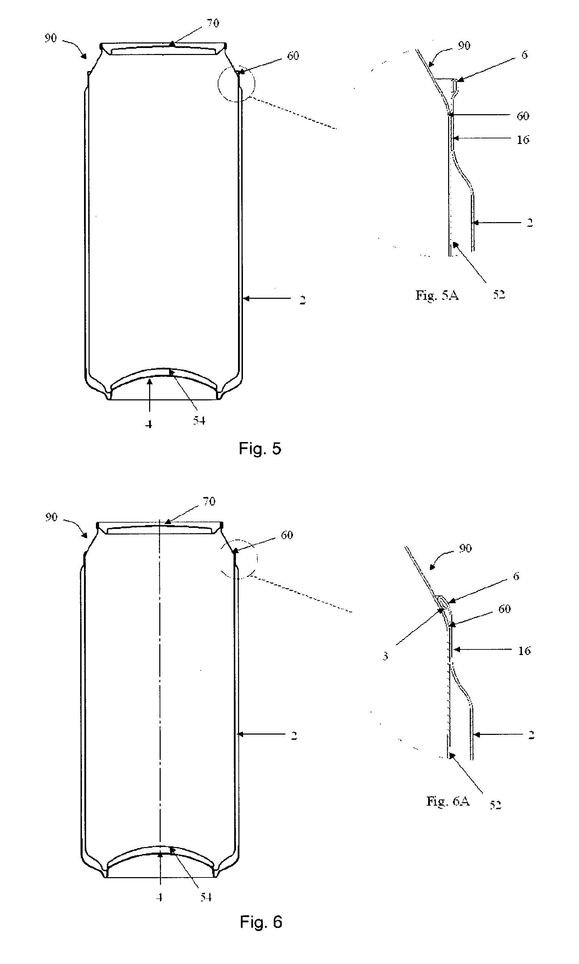

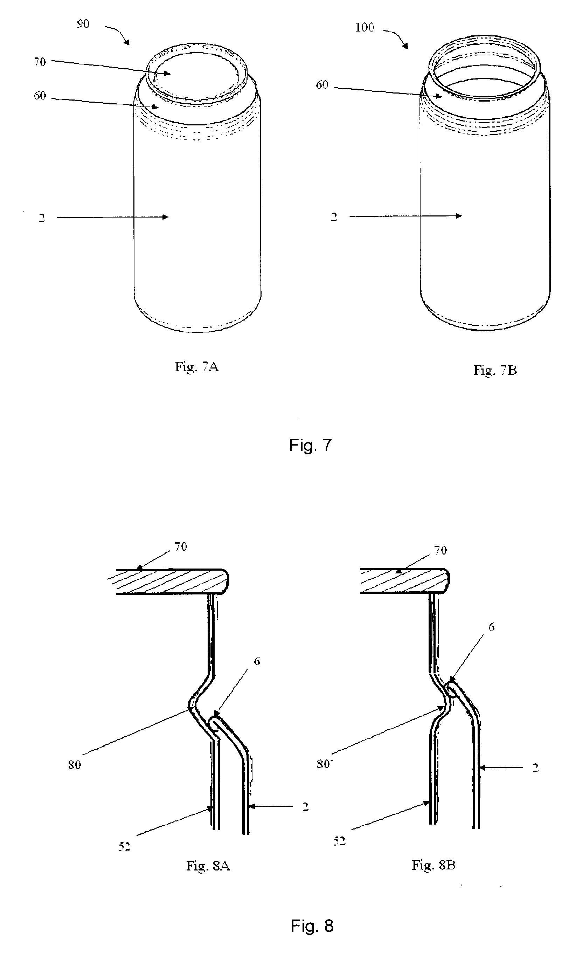

Figure 1 (including detail Fig. 1A) shows an outer can body 1 comprising a sidewall 2 and a base 4. The sidewall 2 terminates in a cut edge 3 defining an aperture. The diameter of the sidewall 2 is larger than the diameter of an inner can 90 (see figures 5 & 6). The exterior surface of the side-wall 2 is preferably decorated, and the interior surface of the side-wall 2 adjacent to the aperture is preferably coated with a lacquer. The base 4 has a shape similar to a conventional beverage can for convenience of manufacture, but any shape that provides an insulating gap between it and the corresponding base 54 of the inner can 90 (see figures 5 & 6) is preferred to minimise the cost of materials and manufacture.

Figure 2 (including detail Fig. 2A) show an outer can body 1 with a neck 16 at the aperture. The neck 16 may be formed by pushing the outer can body 1 into a tool. The inside diameter of the neck 16 is preferably equal to or slightly larger than the outside diameter of the inner can 90.

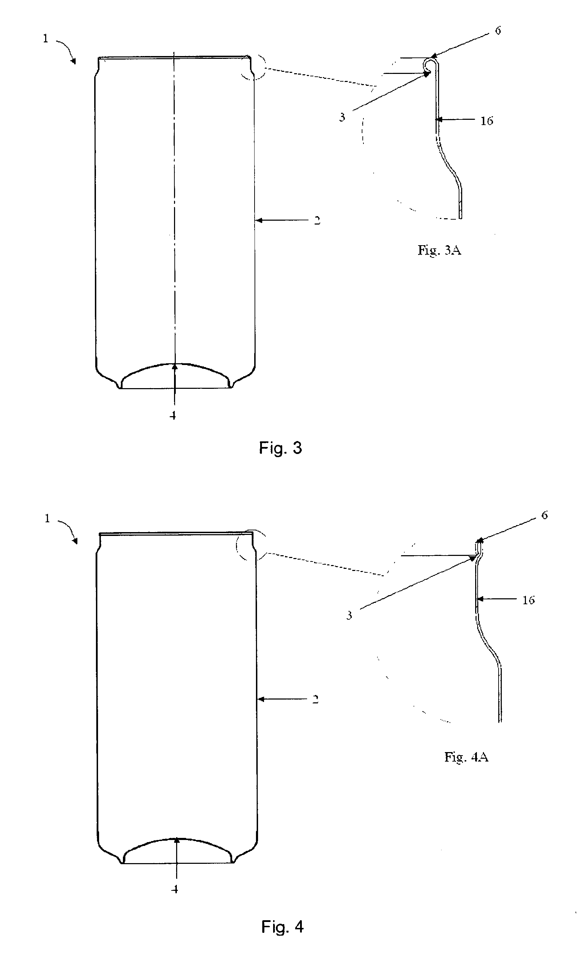

Figure 3 (including detail Fig. 3A) shows a necked outer can body 1 ,16 with an inward curl 6 about the aperture at the cut edge 3. An inward bend or "pre-curl" (not shown) may be formed at the cut edge 3 to assist in subsequent forming of the curl 6 and to prevent wrinkles or the like. Such a curl 6 may be formed by pushing the cut edge 3 of the can body 1 into a tool, and such a tool preferably comprises one or more profiled rollers arranged to roll around the aperture during forming of the curl 6. In such a tool, the profile of the tool has a radius matching that of the curl 6 to be formed.

Figure 4 (including detail Fig. 4A) shows an outer can body 1 with the curl 6 modified in shape. Such a "modified curl" may be formed by pushing a tool into the aperture of the outer can 1, to increase the diameter of the inside of the formed curl 8 to that of the neck 16 below. Any increase in the diameter of the outside of the formed curl 6 may be limited by placing a solid ring around the aperture whilst pushing the expansion tool into the aperture. This ensures that the curl 6 does not impede the aperture through which the inner can (not shown) slides into the outer can body 1.

Figure 5 (including detail Fig. 5A) shows an assembly comprising an inner can 90 inserted into the outer can body 1. Preferably, the curl 6 of the outer can body 1 remains above the shoulder 60 of the inner can 90 after insertion, when the base 54 of the inner can rests on the base 4 of the outer can body 1. Preferably, the inner can 90 is an already-filled beverage can with an end 70 seamed thereon, and preferably this is chilled to help preserve the quality of the can contents.

At this stage, a sealant may be placed in the gap between the curl 6 of the outer can body 1 and the shoulder 60 of the inner can 90.

Fig 6 (including detail Fig. 6A) shows the assembly of figure 5, with the curl 6 formed inwardly to reduce the diameter of the inside of the formed curl 6 to less than the outside diameter of the side-wall 52 of the inner can 90, so that the inside of the formed curl 6 contacts the inner can 90 just above the shoulder 60, thereby securing the inner can 90 and the outer can body 1 together. The cut edge 3 is now safely hidden.

Preferably, the curl 6 is formed inwardly by pushing a profiled tool axially against the outside of the formed curl 6. Preferably, a force is applied between the end 70 of the inner can 90 and the base 4 of the outer can body 1 during this forming operation, to flex the can bases together so that the inner can 90 cannot move axially after forming has been completed and any spring-back has occurred. The profiled tool is preferably provided with contact surfaces to centralise it within the outer can body 1 prior to inwardly forming the curl 6.

If desired, the profiled tool may be pushed further against the outside of the formed curl 6 than shown in figure 6, so as to further squash the curl 6 and/or locally deform the inner can 90 to provide either a tighter or a smoother join, and/or the inner can 90, may be provided with an annular recess to accommodate the curl 6.

Figures 1 to 6 illustrate an example of a double-walled container formed using an outer can body 1 having an original diameter larger than that of the inner can 90, which is accommodated therein. Alternatively, the outer can body 1 may have an original diameter approximately equal to that of the inner can 90 and the outer can body 1 may then be expanded, so that its diameter is larger than that of the inner can 90.

The examples included above are merely illustrative and other features and methods of construction will be apparent to persons skilled in the art are intended to be included within the scope of the present claims.

## Claims

1. A double walled container comprising
- an inner container having a sidewall (52) provided with a shoulder (60) or a bead (80, 80') and a base (54) connected thereto, Lnsected into
- an outer container (1) having a sidewall (2) with an inwardly formed curl (6) and a base (4) connected thereto and arranged to accommodate the inner container, whilst defining a gap therebetween,
**characterised in that**
the inside of the curl (6) contacts the inner can (90) just above the shoulder (60), thereby securing the inner container within the outer container (1) and the cut edge (3) of the outer container (1) is safely hidden within the curl (6).

2. A double walled container according to claim 1, wherein the sidewall (52) of the inner container is substantially cylindrical and the free-end of the sidewall (2) of the outer container (1) defines a rim that is inwardly formed to a diameter less than the diameter of the cylindrical sidewall (52) of the inner container.

3. A double walled container according to any of the preceding claims, wherein the gap between the sidewall (2) of the outer container (1) and the sidewall (52) of the inner container is filled with thermal insulation and/or a support structure.

4. A double walled container according to any of the preceding claims, wherein the gap between the sidewall (2) of the outer container (1) and the sidewall (52) of the inner container is pressurised.

5. A double walled container according to any of the preceding claims, wherein the inner and outer containers are made of metal.

6. A method of manufacture of a double walled container, comprising the steps of
- taking an inner container having a sidewall (52) provided with a shoulder (60) or a bead (80, 80'), and a base (54) connected thereto,
- forming an outer container (1) adapted to accommodate the inner container and having an inwardly formed curl (6),
- sliding the inner container into the outer container (1), to define a gap therebetween, so that the inside of the curl (6) contacts the inner can (90) just above the shoulder , thereby securing the inner container within the outer container (1) and the cut edge (3) of the outer container (1) is safely hidden within the curl (6).

7. A method of manufacture of a double walled container according to claim 6, wherein a product is filled into the inner container (90) and sealed therein, before sliding the filled and sealed inner container (90) into the outer container (1).

8. A method of manufacture of a double walled container according to claim 6 or claim 7, wherein the inner and outer containers are made from sheet metal.

9. A method of manufacture of a double walled container according to claim 8, wherein the sheet metal is coated with a coating containing organic materials or polymers.

10. A method of manufacture of a double walled container according to claim 9, wherein the coating applied to the inner and/or outer containers is fused together after the outer container is necked in to a diameter less than the diameter of the sidewall (52) of the inner container.

## Patentansprüche

1. Doppelwandiger Behälter, der Folgendes umfasst:
- einen inneren Behälter, der eine Seitenwand (52), die mit einem Absatz (60) oder einer Wulst (80, 80') versehen ist, und eine Basis (54), die mit derselben verbunden ist, aufweist, eingesetzt in
- einen äußeren Behälter (1), der eine Seitenwand (2) mit einer nach innen geformten Bördelung (6) und eine Basis (4), die mit derselben verbunden ist, aufweist und dafür angeordnet ist, den inneren Behälter aufzunehmen, während ein Spalt zwischen denselben definiert wird,
**dadurch gekennzeichnet, dass**
die Innenseite der Bördelung (6) die innere Dose (90) gerade oberhalb des Absatzes (60) berührt, wodurch der innere Behälter innerhalb des äußeren Behälters (1) befestigt wird und die Schnittkante (3) des äußeren Behälters (1) sicher innerhalb der Bördelung (6) verborgen ist.

2. Doppelwandiger Behälter nach Anspruch 1, wobei die Seitenwand (52) des inneren Behälters im Wesentlichen zylindrisch ist und das freie Ende der Seitenwand (2) des äußeren Behälters (1) einen Rand definiert, der nach innen bis zu einem Durchmesser geformt ist, der geringer ist als der Durchmesser der zylindrischen Seitenwand (52) des inneren Behälters.

3. Doppelwandiger Behälter nach einem der vorhergehenden Ansprüche, wobei der Spalt zwischen der Seitenwand (2) des äußeren Behälters (1) und der Seitenwand (52) des inneren Behälters mit Wärmeisolierung und/oder einer Stützstruktur gefüllt ist.

4. Doppelwandiger Behälter nach einem der vorhergehenden Ansprüche, wobei der Spalt zwischen der Seitenwand (2) des äußeren Behälters (1) und der Seitenwand (52) des inneren Behälters unter Druck gesetzt ist.

5. Doppelwandiger Behälter nach einem der vorhergehenden Ansprüche, wobei der innere und der äußere Behälter aus Metall hergestellt sind.

6. Verfahren zur Herstellung eines doppelwandigen Behälters, das die folgenden Schritte umfasst:
- das Nehmen eines inneren Behälters, der eine Seitenwand (52), die mit einem Absatz (60) oder einer Wulst (80, 80') versehen ist, und eine Basis (54), die mit derselben verbunden ist, aufweist,
- das Formen eines äußeren Behälters (1), der dafür eingerichtet ist, den inneren Behälter aufzunehmen, und eine nach innen geformte Bördelung (6) aufweist
- das Schieben des inneren Behälters in den äußeren Behälter (1), um einen Spalt zwischen denselben zu definieren, so dass die Innenseite der Bördelung (6) die innere Dose (90) gerade oberhalb des Absatzes berührt, wodurch der innere Behälter innerhalb des äußeren Behälters (1) befestigt wird und die Schnittkante (3) des äußeren Behälters (1) sicher innerhalb der Bördelung (6) verborgen ist.

7. Verfahren zur Herstellung eines doppelwandigen Behälters nach Anspruch 6, wobei ein Erzeugnis in den inneren Behälter (90) gefüllt und in demselben versiegelt wird, bevor der gefüllte und versiegelte innere Behälter (90) in den äußeren Behälter (1) geschoben wird.

8. Verfahren zur Herstellung eines doppelwandigen Behälters nach Anspruch 6 oder Anspruch 7, wobei der innere und der äußere Behälter aus Metallblech hergestellt sind.

9. Verfahren zur Herstellung eines doppelwandigen Behälters nach Anspruch 8, wobei das Metallblech mit einer Beschichtung beschichtet ist, die organische Materialien oder Polymere enthält.

10. Verfahren zur Herstellung eines doppelwandigen Behälters nach Anspruch 9, wobei die auf den inneren und/oder den äußeren Behälter aufgebrachte Beschichtung miteinander verschmolzen wird, nachdem der äußere Behälter auf einen Durchmesser eingeschnürt wird, der geringer ist als der Durchmesser der Seitenwand (52) des inneren Behälters.

## Revendications

1. Récipient à double paroi comprenant :
- un récipient interne présentant une paroi latérale (52), pourvue d'un épaulement (60) ou d'un renflement (80, 80'), et une base (54) reliée à celle-ci, introduit dans
- un récipient externe (1) présentant une paroi latérale (2), pourvue d'un bord roulé vers l'intérieur (6), et une base (4) reliée à celle-ci, et conçu pour recevoir le récipient interne, tout en définissant un espace vide entre eux,
**caractérisé en ce que** l'intérieur du bord roulé (6) est en contact avec la canette intérieure (90) juste au-dessus de l'épaulement (60), en assujettissant ainsi le récipient interne à l'intérieur du récipient externe (1) et le bord coupé (3) du récipient externe (1) étant bien dissimulé à l'intérieur du bord roulé (6).

2. Récipient à double paroi selon la revendication 1, dans lequel la paroi latérale (52) du récipient interne est sensiblement cylindrique et l'extrémité libre de la paroi latérale (2) du récipient externe (1) définit une encolure formée vers l'intérieur pour présenter un diamètre inférieur au diamètre de la paroi latérale (52) cylindrique du récipient interne.

3. Récipient à double paroi selon l'une quelconque des revendications précédentes, dans lequel l'espace vide entre la paroi latérale (2) du récipient externe (1) et la paroi latérale (52) du récipient interne est rempli d'un isolant thermique et/ou d'une structure de support.

4. Récipient à double paroi selon l'une quelconque des revendications précédentes, dans lequel l'espace vide entre la paroi latérale (2) du récipient externe (1) et la paroi latérale (52) du récipient interne est pressurisé.

5. Récipient à double paroi selon l'une quelconque des revendications précédentes, dans lequel les récipients interne et externe sont en métal.

6. Procédé de fabrication d'un récipient à double paroi, comprenant les étapes consistant à :
- prendre un récipient interne présentant une paroi latérale (52), pourvue d'un épaulement (60) ou d'un renflement (80, 80'), et une base (54) reliée à celle-ci,
- former un récipient externe (1) conçu pour recevoir le récipient interne et présentant un bord roulé vers l'intérieur (6),
- faire glisser le récipient interne dans le récipient externe (1), pour définir un espace vide entre eux, de manière que l'intérieur du bord roulé (6) soit en contact avec la canette intérieure (90) juste au-dessus de l'épaulement, assujettissant ainsi le récipient interne à l'intérieur du récipient externe (1) et le bord coupé (3) du récipient externe (1) étant bien dissimulé à l'intérieur du bord roulé (6).

7. Procédé de fabrication d'un récipient à double paroi selon la revendication 6, dans lequel un produit est introduit dans le récipient interne (90) et hermétiquement contenu dans celui-ci, avant que le récipient interne (90) rempli ne soit glissé et hermétiquement contenu dans le récipient externe (1).

8. Procédé de fabrication d'un récipient à double paroi selon la revendication 6 ou la revendication 7, dans lequel les récipients interne et externe sont réalisés en tôle.

9. Procédé de fabrication d'un récipient à double paroi selon la revendication 8, dans lequel la feuille de métal est revêtue d'un revêtement contenant des polymères ou matériaux organiques.

10. Procédé de fabrication d'un récipient à double paroi selon la revendication 9, dans lequel le revêtement appliqué au récipient interne et/ou récipient externe est fusionné après que l'encolure du récipient externe ait été resserrée à un diamètre inférieur au diamètre de la paroi latérale (52) du récipient interne.
